# EUROPEAN PATENT APPLICATION

(11) **EP 4 700 584 A1**
(43) Date of publication of application: **25.02.2026**
(21) Application number: 25186940.0
(22) Date of filing: 02.07.2025
(51) Int. Cl.: G06F 11/16, G06F 11/07, G06F 11/20

(54) **FAIL-SAFE COMPUTER SYSTEM**

(30) Priority: 21.08.2024 JP 2024139461
(71) Applicant: Kyosan Electric Mfg. Co., Ltd., Tsurumi-ku, Yokohama-shi Kanagawa 230-0031 (JP)
(72) Inventor: ANZAWA, Takuya, Yokohama-shi, Kanagawa, 230-0031 (JP); ITAGAKI, Tomonori, Yokohama-shi, Kanagawa, 230-0031 (JP); OKI, Yuji, Yokohama-shi, Kanagawa, 230-0031 (JP)
(74) Representative: Hoffmann Eitle

(57) **Abstract**

In a fail-safe computer system (1), a master CPU (12) determines and assigns, for each assignment program, a priority processing CPU and a reserve processing CPU to be in charge of calculation processing of the assignment program, transmits given input data for the assignment program to the priority processing CPU and the reserve processing CPU to which the assignment program is assigned, causes the priority processing CPU and the reserve processing CPU to execute calculation processing based on the input data subsequent to a previous calculation process, and obtains calculation result data. The priority processing CPU executes the calculation processing based on the input data, and transmits the calculation result data to the master CPU (12) and the reserve processing CPU. The reserve processing CPU executes the calculation processing based on the input data, and transmits the calculation result data to the master CPU (12).

## Description

### CROSS REFERENCE TO RELATED APPLICATIONS

This application is based upon and claims the benefit of priority to Japanese Patent Application No. 2024-139461 filed on August 21, 2024, the entire contents of which are incorporated herein by reference.

### BACKGROUND OF THE INVENTION

The present disclosure relates to a fail-safe computer system.

For example, in systems that require high safety and high reliability, like logical processing sections of safety equipment such as railway signaling systems, computer systems are constructed and implemented using fail-safe CPUs (fail-safe computers) (for example, JP 2019-147532A and JP 2018-118595A).

As systems become more complex and higher speed calculations are required, there is a demand for further improvement in the processing power of fail-safe CPUs. Therefore, a system configuration that uses a plurality of fail-safe CPUs to achieve parallel calculation processing is conceivable. In this case, in order to achieve high safety and high reliability in the entire system, it is necessary to ensure soundness in data transmission and reception between fail-safe CPUs.

### BRIEF DESCRIPTION OF THE DRAWINGS

FIG. 1 shows an application example of a fail-safe computer system.
FIG. 2 is an explanatory diagram of distributed processing of programs.
FIG. 3 is an explanatory diagram of program execution control.
FIG. 4 is an explanatory diagram of program execution control.
FIG. 5 is an explanatory diagram of program execution control.
FIG. 6 is an explanatory diagram of program execution control.
FIG. 7 is an explanatory diagram of program execution control.
FIG. 8 is an explanatory diagram of program execution control.
FIG. 9 is an explanatory diagram of program execution control.
FIG. 10 shows an example of a functional configuration of a master CPU.
FIG. 11 shows an example of a functional configuration of a processing CPU.

### DETAILED DESCRIPTION

The following disclosure provides many different embodiments, or examples, for implementing different features of the provided subject matter. These are, of course, merely examples and are not intended to be limiting. In addition, the disclosure may repeat reference numerals and/or letters in the various examples. This repetition is for the purpose of simplicity and clarity and does not in itself dictate a relationship between the various embodiments and/or configurations discussed. Further, when a first element is described as being "connected" or "coupled" to a second element, such description includes embodiments in which the first and second elements are directly connected or coupled to each other, and also includes embodiments in which the first and second elements are indirectly connected or coupled to each other with one or more other intervening elements in between.

A first aspect to accomplish the foregoing object is a fail-safe computer system including a master CPU which is a fail-safe CPU and a plurality of processing CPUs, each of which is a fail-safe CPU,
in which the master CPU includes: an assignment control section that determines and assigns, for each assignment program, a priority processing CPU and a reserve processing CPU to be in charge of calculation processing of the assignment program among the plurality of processing CPUs; and a process control section that transmits given input data for the assignment program to the priority processing CPU and the reserve processing CPU to which the assignment program is assigned, causes the priority processing CPU and the reserve processing CPU to execute calculation processing based on the input data subsequent to a previous calculation process, and obtains calculation result data, and
in which each of the processing CPUs, in a case of the priority processing CPU, executes calculation processing based on the input data, stores calculation result data as premise data for a next calculation process, and transmits the calculation result data to the master CPU and the reserve processing CPU, and, in a case of the reserve processing CPU, executes calculation processing based on the input data, transmits calculation result data to the master CPU, and stores either the calculation result data or the calculation result data received from the priority processing CPU as premise data for the next calculation process.

According to the first aspect, it is possible to maintain the safety of a fail-safe computer system having a plurality of fail-safe CPUs and improve the reliability of the same. That is, the master CPU transmits the input data corresponding to the assignment program to each of the priority processing CPU and the reserve processing CPU, which are processing CPUs responsible for the calculation processing of the assignment program, causes them to execute the calculation processing based on the input data, and obtains calculation result data. This duplicates the calculation processing of the assignment program, and if data transmission and reception between the fail-safe CPUs are performed correctly, the same calculation result data can be obtained from the duplicated calculation processing, thereby ensuring the soundness of data transmission and reception. Accordingly, even when a plurality of fail-safe CPUs is provided, it is possible to maintain the safety of the entire system and improve the reliability of the same.

The priority processing CPU stores the calculation result data as premise data for the next calculation result and transmits it to the reserve processing CPU, and the reserve processing CPU stores either the executed calculation result data or the calculation result data received from the priority processing CPU as premise data for the next calculation result. Accordingly, it is possible to keep the calculation result data consistent between the priority processing CPU and the reserve processing CPU for each calculation processing based on input data, thereby maintaining safety and achieving further improvement in reliability.

A second aspect is the fail-safe computer system in the first aspect, in which
in a case of the reserve processing CPU, the processing CPU verifies the calculation result data of the executed calculation processing against the calculation result data received from the priority processing CPU.

According to the second aspect, the reserve processing CPU verifies the executed calculation result against the calculation result received from the priority processing CPU. Accordingly, even if the input data transmitted from the master CPU to the reserve processing CPU becomes corrupted due to a transmission/reception error, for example, keeping consistency between the premise data stored in the reserve processing CPU and the premise data stored in the priority processing CPU makes it possible to maintain safety and improve reliability without affecting the next calculation processing.

A third aspect is the fail-safe computer system in the first or second aspect, in which
the fail-safe CPUs are asynchronous, and
an execution cycle of the master CPU is shorter than an execution cycle of the processing CPUs.

According to the third aspect, the time required for data transmission and reception between the master CPU and the priority CPU and between the master CPU and the reserve CPU can be shortened, thereby achieving improvement in the processing speed.

A fourth aspect is the fail-safe computer system in any one of the first to third aspects, in which
the process control section externally inputs the input data, causes the priority processing CPU and the reserve processing CPU to execute calculation processing based on the input data, adopts the calculation result data obtained earlier from either the priority processing CPU or the reserve processing CPU, and externally outputs the calculation result data.

If the fail-safe CPUs are asynchronous, the timings at which the calculation result data is obtained from the priority processing CPU and the reserve processing CPU may differ. However, the priority processing CPU and the reserve processing CPU are fail-safe CPUs, and thus the reliability of the calculation processing is guaranteed. Therefore, as in the fourth aspect, adopting the calculation result data obtained earlier from either the priority processing CPU or the reserve processing CPU shortens the time taken from external input of the input data to external output of the calculation result, thereby making it possible to improve the processing speed.

A fifth aspect is the fail-safe computer system in any one of the first to fourth aspects, in which
the master CPU includes:
an assignment switching control section that performs assignment switching to set the reserve processing CPU as the new priority processing CPU and set the priority processing CPU as the new reserve processing CPU if a non-reception state in which no calculation result data has been received from the priority processing CPU after the transmission of the input data satisfies a predetermined long-time condition.

If the fail-safe CPUs are asynchronous, the timings at which the master CPU obtains the calculation result data from the priority processing CPU and the reserve processing CPU may differ, but the difference is expected to be within a predetermined time according to the execution cycle. Therefore, as in the fifth aspect, if the non-reception state in which no calculation result data has been received from the priority processing CPU after the transmission of the input data satisfies a predetermined long-time condition, it is possible to maintain safety and improve reliability by switching the assignment of the processing CPUs between the priority processing CPU and the reserve processing CPU. For example, if a transmission/reception error occurs between the master CPU and the priority processing CPU, the non-reception state in which the calculation result data from the priority processing CPU is not received will continue. In such a case, it is possible to switch the assignment of the processing CPUs between the priority processing CPU and reserve processing CPU.

A sixth aspect is the fail-safe computer system in the fifth aspect, in which
the assignment switching control section determines whether the long-time condition is satisfied based on an elapsed time after receiving the calculation result data from the reserve processing CPU.

According to the sixth aspect, it is possible to determine whether the long-time condition is satisfied, based on the elapsed time after receiving the calculation result data from the reserve processing CPU. This makes it possible to quickly switch the assignment of the processing CPUs between the priority processing CPU and the reserve processing CPU in the event of occurrence of a transmission/reception error between the master CPU and the priority processing CPU, for example.

A preferred embodiment of the present disclosure is described below with reference to the drawings. It should be noted that exemplary embodiments to which the present disclosure is applicable are not limited to the exemplary embodiments to be described below. Furthermore, in the drawings, identical elements are denoted with identical reference numerals.

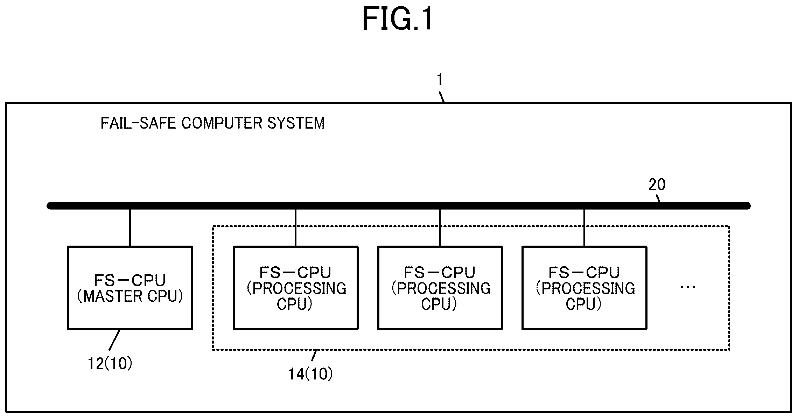

FIG. 1 is a diagram showing an application example of a fail-safe computer system according to the present embodiment. As shown in FIG. 1, a fail-safe computer system 1 of the present embodiment is configured by connecting a plurality of fail-safe CPUs 10 via an internal bus 20 so as to be able to transmit and receive data.

The fail-safe CPUs 10 are also called fail-safe computers, and each fail-safe CPU 10 has a redundant internal configuration, and is a computer that is guaranteed to be highly safe and highly reliable. In other words, one fail-safe CPU 10 has two or more systems internally configured in software or hardware, and has a self-diagnosis function by which the systems execute the same processing, and a normal processing result is output only if the processing results of the systems are identical, and it is determined that a failure has occurred if there is a mismatch. Each fail-safe CPU 10 is implemented as a blade computer (also called a CPU board or the like) in which electronic elements such as a CPU and a memory are mounted on a single electronic board. The fail-safe computer system 1 is implemented as a blade computer system in which a plurality of blade computers each made of these fail-safe CPUs 10 are mounted in a housing.

In the present embodiment, of the plurality of fail-safe CPUs 10 that constitute the fail-safe computer system 1, one is configured as a master CPU 12 and the others are configured as processing CPUs 14. For ease of understanding, the master CPU 12 is illustrated in the drawings as if it were composed of a single fail-safe CPU 10, but it is preferable to implement the master CPU 12 in a redundant configuration (for example, a duplicated configuration) using a plurality of fail-safe CPUs 10. Although the internal bus 20 is illustrated as one in the drawing, it is preferable to implement the internal bus 20 in a redundant (dual) bus configuration. The master CPU 12 controls data input/output into/from the outside of the system, causes the processing CPUs 14 to execute calculation processing based on input data, and externally outputs the results of the calculation processing. The fail-safe CPUs 10 also execute processing at predetermined execution cycles, but the fail-safe CPUs 10 execute calculation processing asynchronously. The execution cycle of the master CPU 12 is designed to be shorter than the execution cycle of the processing CPUs 14.

In order to ensure the integrity of data transmitted and received between the fail-safe CPUs 10, the fail-safe computer system 1 of the present embodiment is configured to perform processing as described below.

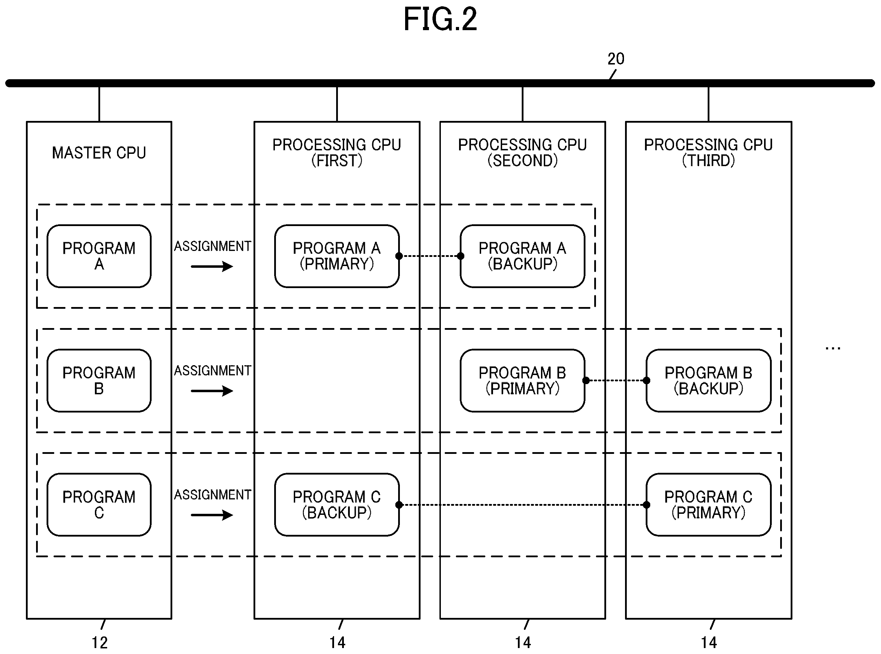

FIG. 2 is a diagram describing the assignment of programs in the fail-safe computer system 1. In the fail-safe computer system 1, programs to be executed are distributed among the plurality of processing CPUs 14. That is, although there are a plurality of programs to be executed, these programs are assigned to the processing CPUs 14 in units of one or more programs that are not related to one another (the processing result of one is not related to the processing of the other programs).

Each program is made redundant by being assigned to two processing CPUs 14, in a pair of one as a primary and the other as a backup. In the example of FIG. 2, there are three programs, "programs A to C", to be executed by the fail-safe computer system 1, which are not related to one another and can be executed independently. Each of the three "programs A to C" is assigned to two processing CPUs 14 in a pair of a primary and a backup. The combination of assigned processing CPUs 14 differs for each program. These programs are managed and identified by identification information (program ID).

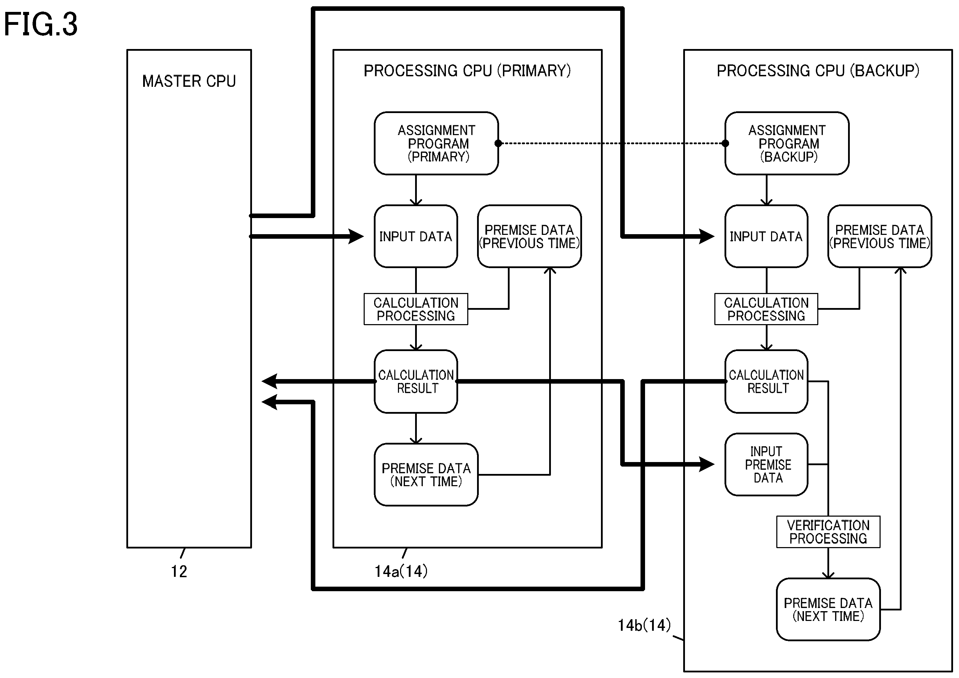

FIG. 3 is a diagram describing execution control of one program, focusing on the flow of data. As shown in FIG. 3, one program (assignment program) is assigned to two processing CPUs 14 (14a, 14b), and one processing CPU 14 is assigned as a primary and the other processing CPU 14 is assigned as a backup. That is, in the example of FIG. 3, the processing CPU 14a is assigned as a primary, and the processing CPU 14b is assigned as a backup. The processing CPU 14 assigned as a primary (processing CPU 14a in FIG. 3) is called a primary processing CPU (priority processing CPU), and the processing CPU 14 assigned as a backup (processing CPU 14b in FIG. 3) is called a backup processing CPU (reserve processing CPU).

The master CPU 12 transmits input data for the assignment program, among data input from the outside the system, to both the primary processing CPU and the backup processing CPU. The primary processing CPU and the backup processing CPU perform calculation processing of the assignment program based on the input data received from the master CPU 12 and premise data which is the result of the previous calculation, and transmit the result of the calculation to the master CPU 12.

The master CPU 12 outputs the calculation results received from the primary processing CPU and/or the backup processing CPU to the outside of the system as the calculation results of the input data. At this time, the master CPU 12 adopts the calculation result received first (earlier) from either the primary processing CPU or the backup processing CPU, and externally outputs the same. In the case of simultaneously receiving the calculation results (performing reception processing in the same execution cycle), the calculation result from the primary processing CPU is adopted on a priority basis. As will be described in detail later, if the calculation result is received from the backup processing CPU first, the master CPU 12 waits for reception of the calculation result from the primary processing CPU, and if the state in which the calculation result cannot be received from the primary processing CPU satisfies a predetermined long-time condition, the assignment is switched between primary and backup.

The primary processing CPU also transmits the calculation result to the backup processing CPU. The backup processing CPU verifies its own calculation result against the calculation result received from the primary processing CPU. Specifically, the backup processing CPU stores its own calculation result as premise data for the next calculation, and when receiving the calculation result from the primary processing CPU, the backup processing CPU determines whether there is a match between the received calculation result and the stored own calculation result. If there is a mismatch, the backup processing CPU overwrites the stored calculation result with the received calculation result, and uses the received calculation result as the premise data for the next calculation processing.

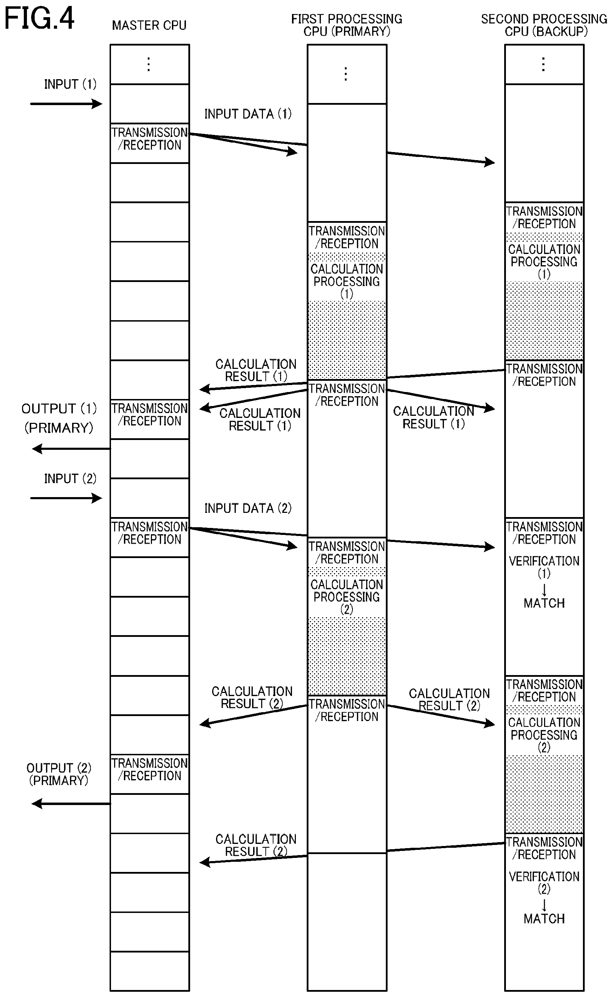

FIGS. 4 to 9 are diagrams describing the execution control of one program in time series. In FIGS. 4 to 9, the vertical direction (downward direction) represents time, the processing by the master CPU 12 and the two processing CPUs 14 (first processing CPU and second processing CPU) to which the program is assigned is illustrated, and the data transmitted and received between them are indicated by thick arrows. The first processing CPU is a primary processing CPU to which a primary program is assigned, and the second processing CPU is a backup processing CPU to which a backup program is assigned.

Each rectangle (cell) divided along the time direction of the master CPU 12 and the processing CPUs 14 represents one execution cycle. The execution cycle of the master CPU 12 is set to 1/4 of the execution cycle of the processing CPUs 14. The content described in each rectangle is the operation that is executed in the corresponding execution cycle. The fail-safe CPUs 10 (master CPU 12 and processing CPUs 14) first perform self-diagnosis processing, then perform data transmission/reception processing with other fail-safe CPUs 10, and then perform other processing such as calculation processing of the assignment program, in each execution cycle. Input data for the assignment program is intermittently input from the outside of the fail-safe computer system 1. This input data is data that includes the initial values in the assignment program. Calculation processing of the assignment program is performed based on the input data (details will be described later, but more precisely, calculation processing of the assignment program is performed based on the input data and the result of the most recent calculation processing) to obtain a calculation result, which is output to the outside of the fail-safe computer system 1. Therefore, in the drawings, inputs or input data are given circled numbers, and calculation processing based on the input data, calculation results, and outputs are given the same circled numbers.

FIG. 4 shows an example of operations in a case where transmission and reception between the fail-safe CPUs 10 are normal. When the first input data for the assignment program is input from the outside of the system, the master CPU 12 transmits the input data (first time) to the primary processing CPU and the backup processing CPU in the next execution cycle.

The primary processing CPU receives the input data (first time) from the master CPU 12, and performs calculation processing (first time) of the assignment program based on the received input data (first time). Then, in the next execution cycle, the primary processing CPU outputs a calculation result (first time) to the master CPU 12 and the backup processing CPU. Similarly, the backup processing CPU receives the input data (first time) from the master CPU 12, performs calculation processing (first time) of the assignment program based on the received input data (first time), and outputs a calculation result (first time) to the master CPU 12 in the next execution cycle.

The master CPU 12 receives the calculation result (first time) from each of the primary processing CPU and the backup processing CPU, but since the receiving processing is performed in the same execution cycle in FIG. 4, the calculation result received from the primary processing CPU is output to the outside of the system as the calculation result of the first input data. In addition, upon receipt of the calculation result (first time) from the primary processing CPU, the backup processing CPU verifies its own calculation result (first time) against the calculation result (first time) received from the primary processing CPU and determines whether there is a match between the two.

Subsequently, after the master CPU 12 outputs the calculation result of the first input data to the outside of the system, the second input data for the assignment program is input from the outside of the system. The processing based on the second input data is performed in a similar manner.

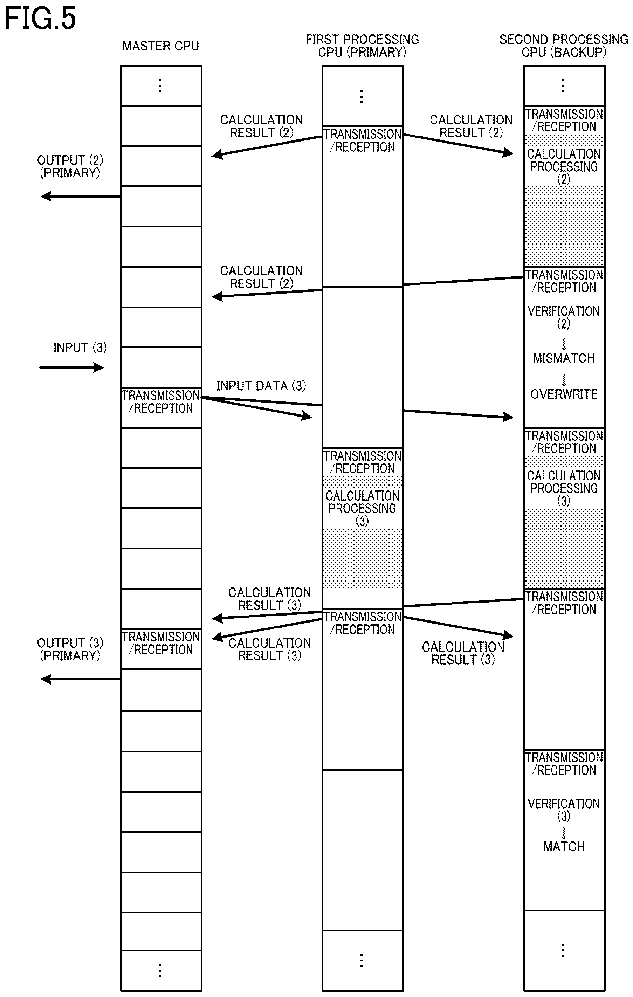

FIG. 5 shows an example of operations in the case where there is a mismatch between the calculation results of the primary processing CPU and the backup processing CPU. The primary processing CPU and the backup processing CPU, as well as the master CPU 12, are also fail-safe CPUs 10. Therefore, when the primary processing CPU and the backup processing CPU each perform calculation processing on the same input data, the calculation results should be the same. FIG. 5 shows an example of operations in the case where some bit error occurs during transmission and reception between the fail-safe CPUs 10 and causes a data error, ultimately resulting in a mismatch between the calculation results. Specifically, in the example of operations, a bit error occurs during transmission of the second input data from the master CPU 12 to the backup processing CPU and causes a data error in the second input data.

The difference from the example of operations shown in FIG. 4 is in that upon receipt of the calculation result of the calculation processing based on the second input data from the primary processing CPU, the backup processing CPU verifies the calculation result of its own calculation processing (second time) against the calculation result (second time) received from the primary processing CPU, and determines that there is a mismatch between the two. This is because a data error has occurred in the second input data. In this case, the backup processing CPU overwrites its own stored calculation result (second time) with the calculation result (second time) received from the primary processing CPU. Accordingly, the primary processing CPU and the backup processing CPU will have the same premise data used in the calculation processing based on the next third input data, so that the calculation results (third time) of the calculation processing will match.

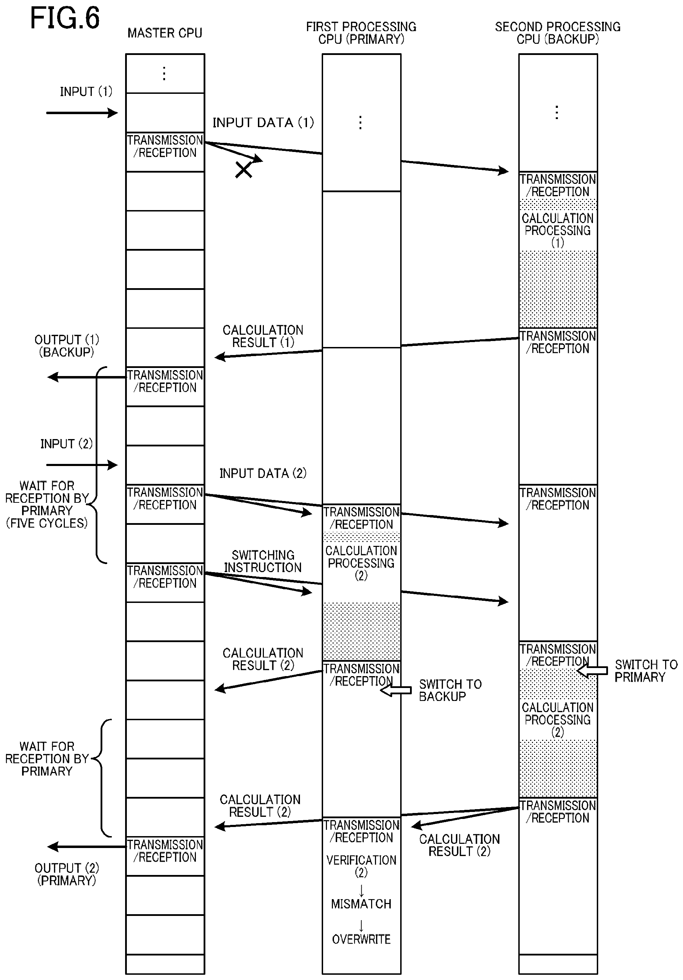

FIG. 6 shows an example of operations in the case where the primary processing CPU cannot receive input data from the master CPU 12.

The difference of the example of operations shown in FIG. 6 from the example of operations shown in FIG. 4 is in that the first input data is transmitted from the master CPU 12 to each of the primary processing CPU and the backup processing CPU, but a communication failure occurs between the master CPU 12 and the primary processing CPU, and the input data (first time) from the master CPU 12 is not received by the primary processing CPU. In this case, the primary processing CPU does not perform the calculation processing of the assignment program based on the first input data, and the primary processing CPU does not transmit the calculation result (first time) to the master CPU 12 and the backup processing CPU.

Meanwhile, the backup processing CPU receives the input data (first time) from the master CPU 12, performs calculation processing (first time) of the assignment program based on the received input data (first time), and transmits the calculation result (first time) to the master CPU 12. However, since the calculation result (first time) from the primary processing CPU is not received, the backup processing CPU does not verify its own calculation result (first time).

The master CPU 12 outputs the calculation result (first time) received from the backup processing CPU to the outside of the system as the calculation result of the first input data. The master CPU 12 then waits for reception of the calculation result (first time) from the primary processing CPU, but when the state in which the calculation result is not received from the primary processing CPU (non-reception state) satisfies a predetermined long-time condition, the master CPU 12 transmits primary/backup switching instructions to the primary processing CPU and the backup processing CPU. That is, the master CPU 12 transmits a switching instruction to the primary processing CPU to switch the assignment to the backup, and to the backup processing CPU to switch the assignment to the primary.

The long-time condition is a time condition that the calculation result is not normally received from the primary processing CPU. Specifically, the long-time condition is determined as a time period corresponding to a predetermined number of execution cycles based on the reception of the calculation result from the backup processing CPU (five cycles in FIG. 6). For example, in view of the asynchronous processing between the fail-safe CPUs 10 and the execution cycle of the processing CPUs 14, the time is determined to be longer than the execution cycle of the processing CPUs 14.

When the first processing CPU, which is the primary processing CPU, receives from the master CPU 12 an instruction to switch to the backup, the first processing CPU operates thereafter as a backup processing CPU that executes the assignment program as the backup. When the second processing CPU, which is the backup processing CPU, receives from the master CPU 12 an instruction to switch to the primary, the second processing CPU operates thereafter as the primary processing CPU that executes the assignment program as the primary.

Therefore, the second processing CPU, which is the new primary processing CPU, performs calculation processing of the assignment program based on the second input data received from the master CPU 12, and transmits the calculation result to the master CPU 12 and the first processing CPU, which is the new backup processing CPU.

The first processing CPU, which is the new backup processing CPU, performs calculation processing of the assignment program based on the second input data received from the master CPU 12, and transmits the calculation result to the master CPU 12. The first processing CPU then verifies the calculation result received from the second processing CPU, which is the new primary processing CPU, against its own calculation result, but since the first processing CPU, which is the new backup processing CPU, has not performed calculation processing of the assignment program based on the first input data, the first processing CPU determines that there is a mismatch between the two. Then, the first processing CPU overwrites the stored own calculation result (second time) with the calculation result (second time) received from the second processing CPU, which is the new primary processing CPU.

Accordingly, the new primary processing CPU (second processing CPU) and the new backup processing CPU (first processing CPU) will have the same premise data used in the calculation processing based on the next (third) input data.

In FIG. 6, the master CPU 12 receives the calculation result (second time) from the new backup processing CPU (first processing CPU) before receiving the calculation result (second time) from the new primary processing CPU (second processing CPU). However, a state in which the calculation result is not received from the primary processing CPU (second processing CPU) (non-reception state) based on the reception of the calculation result (second time) from the new backup processing CPU (first processing CPU) does not satisfy the long-time condition. Therefore, the master CPU 12 outputs the calculation result (second time) from the new primary processing CPU (second processing CPU) to the outside of the system as the calculation result of the second input data.

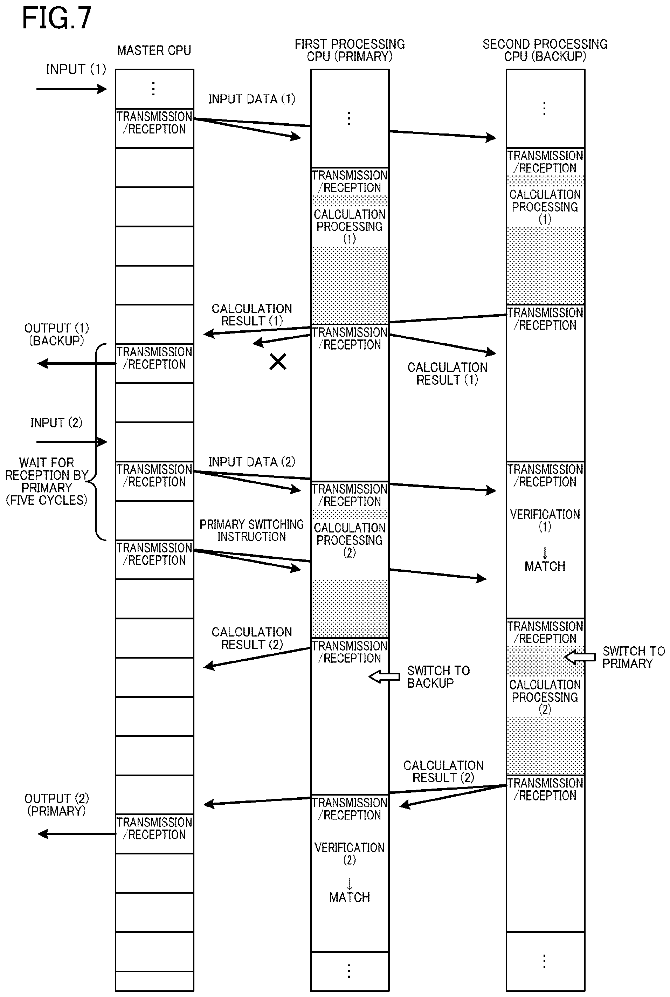

FIG. 7 shows an example of operations in the case where the master CPU cannot receive the calculation result from the primary CPU.

The difference of the example of operations shown in FIG. 7 from the example of operations shown in FIG. 4 is in that the primary processing CPU transmits the calculation result of the calculation processing based on the first input data to the master CPU 12 and the backup processing CPU. In this example, however, a communication failure occurs between the primary processing CPU and the master CPU, and the master CPU 12 does not receive the calculation result (first time) from the primary processing CPU.

The master CPU 12 which has not received the calculation result (first time) from the primary processing CPU outputs the calculation result (first time) received from the backup processing CPU to the outside of the system as the calculation result of the first input data.

Then, as in the case with the switching instructions described above with reference to FIG. 6, if the state in which the calculation result is not received from the primary processing CPU (non-reception state) satisfies the predetermined long-time condition with respect to the reception of the calculation result (first time) from the backup processing CPU, the master CPU 12 transmits primary/backup switching instructions to the primary processing CPU and the backup processing CPU.

On the other hand, upon receipt of the calculation result (first time) from the primary processing CPU, the backup processing CPU verifies its own calculation result (first time) against the calculation result (first time) from the primary processing CPU and determines whether there is a match between the two.

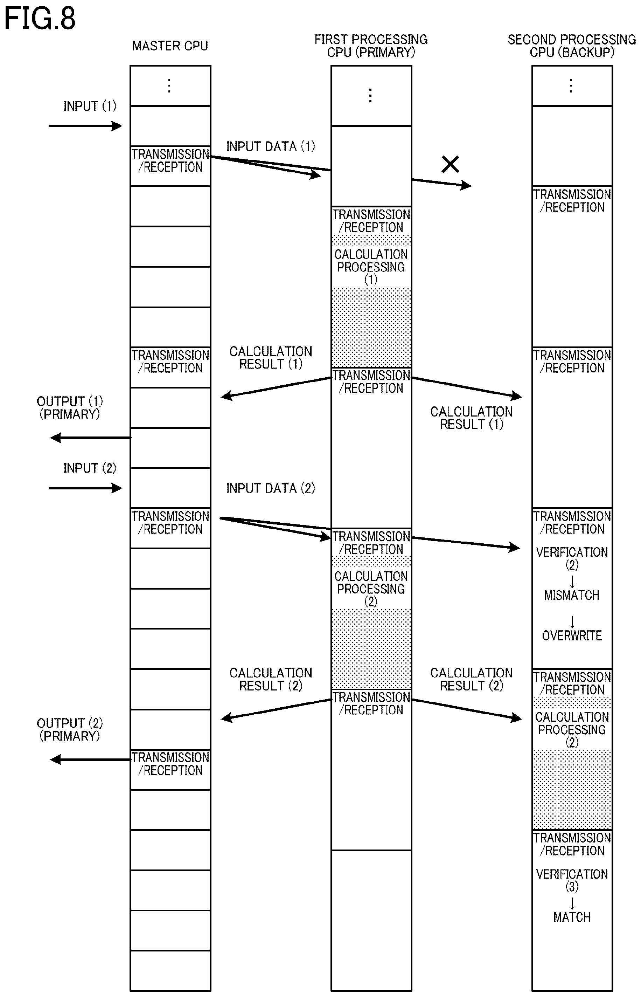

FIG. 8 shows an example of operations in the case where the backup processing CPU cannot receive input data from the master CPU 12.

The difference of the example of operations shown in FIG. 8 from the example of operations shown in FIG. 4 is in that the first input data is transmitted from the master CPU 12 to each of the primary processing CPU and the backup processing CPU, but a communication failure occurs between the master CPU 12 and the backup processing CPU, and the input data from the master CPU 12 is not received by the backup processing CPU.

Since the backup processing CPU does not receive the input data (first time), the backup processing CPU does not perform the calculation processing (first time) of the assignment program based on the input data (first time) and does not transmit the calculation result (first time) to the master CPU 12. The master CPU 12 outputs the calculation result (first time) received from the primary processing CPU to the outside of the system as the calculation result of the first input data.

Upon receipt of the calculation result (first time) from the primary processing CPU, the backup processing CPU verifies its own calculation result (first time) against the calculation result (first time) received from the primary processing CPU. However, since the backup processing CPU has not performed calculation processing based on the input data (first time), the backup processing CPU determines that there is a mismatch between the two. Then, the backup processing CPU overwrites its own stored calculation result with the calculation result (first time) received from the primary processing CPU.

Accordingly, the primary processing CPU and the backup processing CPU will have the same premise data used in the calculation processing based on the next (second) input data.

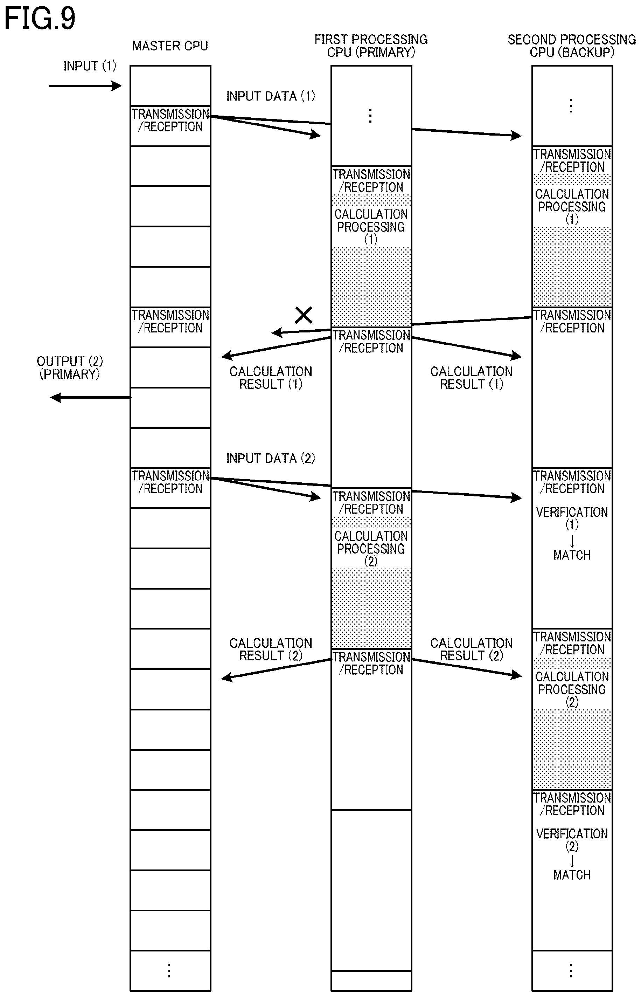

FIG. 9 shows an example of operations in the case where the master CPU 12 cannot receive the calculation result from the backup processing CPU.

The difference of the example of operations shown in FIG. 9 from the example of operations shown in FIG. 4 is in that the backup processing CPU transmits the calculation result of the calculation processing based on the first input data to the master CPU 12. However, a communication failure occurs between the backup processing CPU and the master CPU 12, and the master CPU 12 does not receive the calculation result (first time) from the backup processing CPU. The master CPU 12 externally outputs the calculation result (first time) from the primary processing CPU as the calculation result of the input data (first time).

In addition, upon receipt of the calculation result (first time) from the primary processing CPU, the backup processing CPU verifies its own calculation result (first time) against the calculation result (first time) received from the primary processing CPU and determines that there is a match between the two.

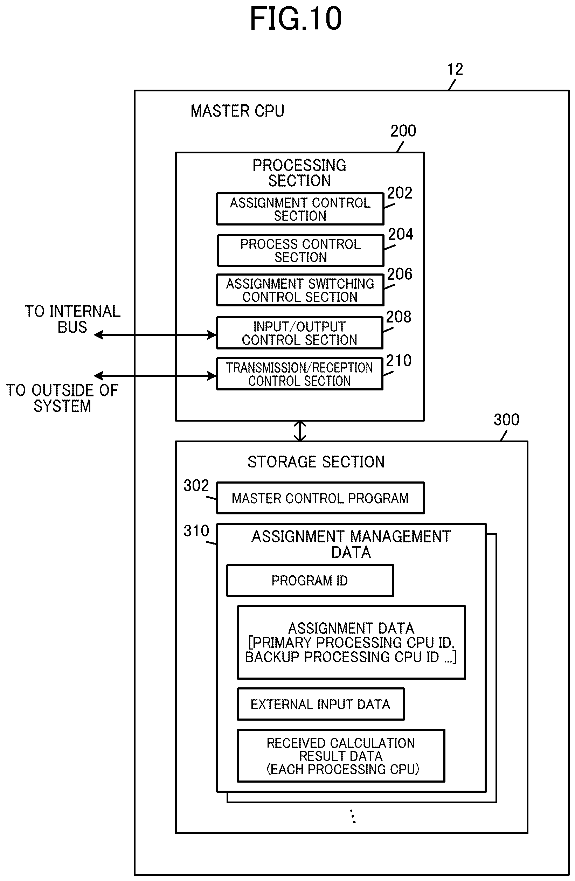

FIG. 10 is a block diagram showing an example of a functional configuration of the master CPU 12. As shown in FIG. 10, the master CPU 12 includes a processing section 200 and a storage section 300.

The processing section 200 includes an assignment control section 202, a process control section 204, an assignment switching control section 206, an input/output control section 208, and a transmission/reception control section 210.

The assignment control section 202 determines and assigns, for each assignment program, a priority processing CPU and a reserve processing CPU to be in charge of calculation processing of the assignment program among a plurality of processing CPUs (see FIG. 2). That is, the assignment control section 202 determines a primary processing CPU, which is the priority processing CPU, and a backup processing CPU, which is the reserve processing CPU, as processing CPUs to which the calculation processing of the assignment program is to be assigned.

The assignment of the processing CPUs is managed with the assignment management data 310. The assignment management data 310 includes, for each program to be executed, assignment data, external input data that is data corresponding to the program and is input from the outside of the system, and received calculation result data that indicates the calculation result received from each of the primary processing CPU and the backup processing CPU, which are associated with a program ID that is identification information for the program. The assignment data includes a primary processing CPU ID, which is the identification information of the primary processing CPU that performs calculation processing of the program, and a backup processing CPU ID, which is the identification information of the backup processing CPU that performs calculation processing of the program.

The process control section 204 transmits given input data for the assignment program to the primary processing CPU and the backup processing CPU related to the assignment program, causes the primary processing CPU and the backup processing CPU to execute calculation processing based on the input data subsequent to the previous calculation processing, and obtains calculation result data (see FIGS. 4 to 9).

The process control section 204 also externally outputs the calculation result data obtained from either the primary processing CPU (priority processing CPU) or the backup processing CPU (reserve processing CPU). At this time, the process control section 204 may place a higher priority on the calculation result data obtained from the primary processing CPU and externally output the same, or may place a higher priority on the calculation result data obtained earlier from either the primary processing CPU or the backup processing CPU and externally output the same.

The assignment switching control section 206 performs assignment switching such that if the non-reception state in which no calculation result data has been received from the primary processing CPU satisfies the predetermined long-time condition after transmission of the input data, the backup processing CPU is set as the new primary processing CPU and the primary processing CPU is set as the new backup processing CPU. For example, it is determined whether the long-time condition is satisfied based on the elapsed time after reception of the calculation result data from the backup processing CPU (see FIGS. 6 and 7).

The input/output control section 208 controls data input and output from and to the outside of the fail-safe computer system 1.

The transmission/reception control section 210 controls data transmission to and reception from other processing CPUs 14 via the internal bus 20.

The storage section 300 stores a master control program 302 for causing the fail-safe CPU 10 to function as the master CPU 12, and assignment management data 310.

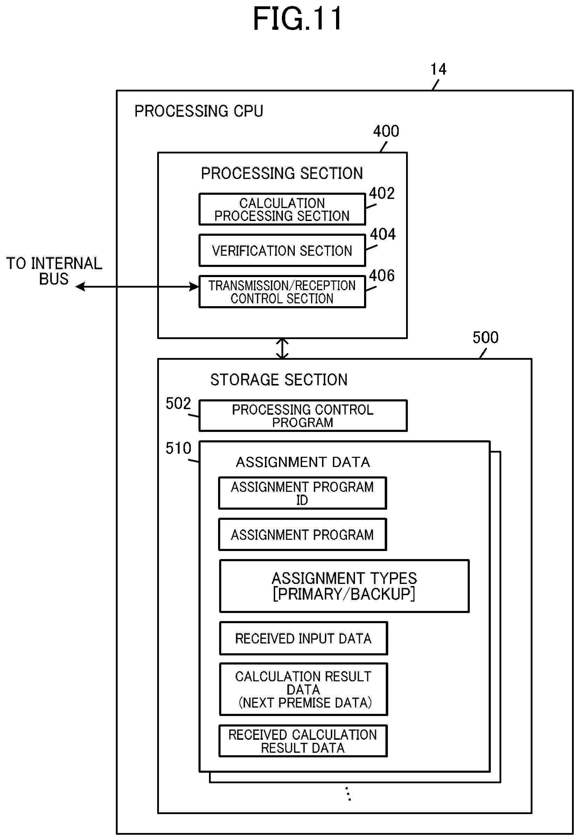

FIG. 11 is a block diagram showing an example of a functional configuration of the processing CPU 14. As shown in FIG. 11, the processing CPU 14 includes a processing section 400 and a storage section 500.

The processing section 400 includes a calculation processing section 402, a verification section 404, and a transmission/reception control section 406.

The calculation processing section 402 executes calculation processing based on the input data, stores the calculation result data as premise data for the next calculation processing, and transmits the calculation result data to the master CPU 12. If the processing CPU 14 is the primary processing CPU, the calculation processing section 402 also transmits the calculation result data to the backup processing CPU. If the processing CPU 14 is the backup processing CPU, the calculation processing section 402 stores either the calculation result data or the calculation result data received from the primary processing CPU as premise data for the next calculation processing (see FIGS. 4 to 9).

If the processing CPU 14 is the backup processing CPU, the verification section 404 verifies the calculation result data of the executed calculation processing against the calculation result data received from the primary processing CPU. For example, it is determined whether there is a match between the two, and if there is a mismatch, the calculation result data stored as premise data for the next calculation processing is overwritten with the calculation result data received from the primary processing CPU.

The storage section 500 stores a processing control program 502 for causing the fail-safe CPUs 10 to function as the processing CPUs 14, and assignment data 510.

The assignment data 510 is data for managing the assignment of programs to the own CPU. The storage section 500 stores, for each assignment program, the assignment program itself, an assignment type indicating whether the program is assigned to the own CPU as a primary or backup, received input data that corresponds to the assignment program and is received from the master CPU 12, calculation result data that indicates the calculation result of the assignment program, and received calculation result data that indicates the calculation result received from the primary processing CPU if the own CPU is the backup processing CPU, in association with an assignment program ID that is identification information for the assignment program.

### [Advantageous Effects]

As a result, in some embodiments, it is possible to maintain the safety of the fail-safe computer system 1 having the plurality of fail-safe CPUs 10 and improve the reliability of the same. That is, the master CPU 12 transmits the input data corresponding to the assignment program to each of the primary processing CPU (priority processing CPU) and the backup processing CPU (reserve processing CPU) which are processing CPUs 14 responsible for the calculation processing of the assignment program, causes them to execute the calculation processing based on the input data, and obtains calculation results. This duplicates the calculation processing of the assignment program, and if data transmission and reception between the fail-safe CPUs are performed correctly, the same calculation result data can be obtained from the duplicated calculation processing, thereby ensuring the soundness of data transmission and reception. Accordingly, even when a plurality of fail-safe CPUs is provided, it is possible to maintain the safety of the entire system and improve the reliability of the same.

The primary processing CPU stores the calculation result as premise data for the next calculation result and transmits it to the backup processing CPU, and the backup processing CPU stores either the executed calculation result or the calculation result received from the primary processing CPU as premise data for the next calculation result. Accordingly, it is possible to keep the calculation results consistent between the primary processing CPU and the backup processing CPU for each calculation processing based on input data, thereby maintaining safety and achieving further improvement in reliability.

Note that embodiments to which the present disclosure is applicable are not limited to the embodiment described above, and it is obvious that it is possible to make modifications appropriately without departing from the gist of the present disclosure.

## Claims

1. A fail-safe computer system (1) comprising a master CPU (12) which is a fail-safe CPU (10) and a plurality of processing CPUs (14), each of which is a fail-safe CPU (10),
wherein the master CPU (12) includes:
an assignment control section (202) that determines and assigns, for each assignment program, a priority processing CPU and a reserve processing CPU to be in charge of calculation processing of the assignment program among the plurality of processing CPUs (14); and
a process control section (204) that transmits given input data for the assignment program to the priority processing CPU and the reserve processing CPU to which the assignment program is assigned, causes the priority processing CPU and the reserve processing CPU to execute calculation processing based on the input data subsequent to a previous calculation process, and obtains calculation result data, and
wherein each of the processing CPUs (14)
in a case of the priority processing CPU, executes calculation processing based on the input data, stores calculation result data as premise data for a next calculation process, and transmits the calculation result data to the master CPU (12) and the reserve processing CPU, and
in a case of the reserve processing CPU, executes calculation processing based on the input data, transmits calculation result data to the master CPU (12), and stores either the calculation result data or the calculation result data received from the priority processing CPU as premise data for the next calculation process.

2. The fail-safe computer system (1) as claimed in claim 1, wherein
in the case of the reserve processing CPU, the processing CPU (14) verifies the calculation result data of the executed calculation processing against the calculation result data received from the priority processing CPU.

3. The fail-safe computer system (1) as claimed in claim 1 or 2, wherein
the fail-safe CPUs (10) are asynchronous, and
an execution cycle of the master CPU (12) is shorter than an execution cycle of the processing CPUs (14).

4. The fail-safe computer system (1) as claimed in any one of claims 1 to 3, wherein
the process control section (204) externally inputs the input data, causes the priority processing CPU and the reserve processing CPU to execute calculation processing based on the input data, adopts the calculation result data obtained earlier from either the priority processing CPU or the reserve processing CPU, and externally outputs the calculation result data.

5. The fail-safe computer system (1) as claimed in any one of claims 1 to 4, wherein
the master CPU (12) includes an assignment switching control section (206) that performs assignment switching to set the reserve processing CPU as the new priority processing CPU and set the priority processing CPU as the new reserve processing CPU if a non-reception state in which no calculation result data has been received from the priority processing CPU after the transmission of the input data satisfies a predetermined long-time condition.

6. The fail-safe computer system (1) as claimed in claim 5, wherein
the assignment switching control section (206) determines whether the long-time condition is satisfied based on an elapsed time after receiving the calculation result data from the reserve processing CPU.
